# EUROPEAN PATENT SPECIFICATION

(11) **EP 2 386 031 B1**
(45) Date of publication and mention of the grant of the patent: **01.05.2013**
(21) Application number: 09786389.8
(22) Date of filing: 07.01.2009
(51) Int. Cl.: F16D 27/112, F16D 41/04

(54) **CLUTCH DEVICE AND ALTERNATOR-STARTER DEVICE COMPRISING SUCH A CLUTCH DEVICE**
KUPPLUNG UND STARTER-GENERATOR ENTHALTEND EINE SOLCHE KUPPLUNG
DISPOSITIF D'EMBRAYAGE ET DISPOSITIF ALTERNATEUR-DÉMARREUR COMPORTANT UN TEL DISPOSITIF D'EMBRAYAGE

(43) Date of publication of application: 16.11.2011
(73) Proprietor: Aktiebolaget SKF, 415 50 Göteborg (SE)
(72) Inventor: HINGOUET, Gwenaël, F-37540 Saint Cyr Sur Loire (FR); GABOREL, Jean-Philippe, F-37000 Tours (FR); GOUJON, Eve, F-42170 Saint Just Saint Rambert (FR); DESCOMBES, Michel, F-78000 Versailles (FR)
(74) Representative: Myon, Gérard Jean-Pierre
(86) International application number: PCT/IB2009/051971
(87) International publication number: WO 2010/079386

(56) References cited:
- EP-A- 1 722 120
- WO-A-2004/065811
- WO-A-2008/050046
- DE-U1- 8 712 853
- FR-A- 2 610 378

## Description

The present invention relates to a clutch device. Furthermore, the present invention relates to an alternator-starter device comprising such a clutch device.

WO-A-2008/050046 illustrates a clutch device for an alternator-starter device, comprising a shaft coupled fast in rotation with the alternator-starter device, a pulley, which is concentric with the shaft, and bearing means arranged between the pulley and the shaft. The clutch device of WO-A-2008/050046 further comprises first friction means fast with the shaft and second friction means fast with the pulley. A one-way clutch is arranged between the shaft and the pulley, so as to transfer a torque from the shaft to the pulley, depending on the rotation speed of the pulley. An electromagnetic actuator is arranged to move the first friction means with respect to the second friction means, when starting the engine, so as to supplement the one-way clutch in transferring torque from the shaft to the pulley.

However, the electromagnetic actuator is housed into the pulley. This arrangement requires large dimensions of the pulley, hence a high inertia. Furthermore, the pulley is weakened by its cavity housing the electromagnetic actuator. The other components of the clutch device, like the ball bearings, must consequently have large dimensions, thus increasing the weight of this clutch device and of the alternator-starter device comprising such a clutch device..

WO-A-2004/065811 describes a clutch device for an alternator-starter device, comprising a shaft coupled fast in rotation with the alternator-starter device, a pulley, which is concentric with the shaft, and one roller bearing arranged between the pulley and the shaft. The clutch device of WO-A-2004/065811 further comprises coupling means to transfer torque between the shaft and the pulley. A one-way clutch is arranged between the shaft and the pulley, so as to transfer a torque from the pulley to the shaft, thus rotating the alternator shaft. An electromagnetic actuator is arranged to move the coupling means into a coupling configuration, where the shaft can transfer torque to the pulley.

The coupling means are arranged, along a radial direction, between the electromagnetic actuator and the roller bearing. However, such an arrangement limits the torque that can be transferred by the coupling means. Hence, the clutch device of WO-A-2004/065811 can supply only low torques, which may not suffice to start the engine, especially a relatively large one.

### SUMMARY OF THE INVENTION

One object of the present invention is to solve the here-above listed drawbacks by providing a clutch device with a compact and simple structure.

This object is achieved by a clutch device comprising:
- a shaft configured to rotate around an axis of rotation, a rotation member which is concentric with said shaft,
- bearing means arranged between said rotation member and said shaft,
- first friction means fast in rotation with said shaft,
- second friction means fast in rotation with said rotation member, said second friction means being arranged so as to face said first friction means, at least one of said first friction means and said second friction means being configured to move in translation,
- a one-way clutch arranged between said shaft and said rotation member,
- a stator having an electromagnetic actuator arranged to move at least one of said first friction means and said second friction means, in translation between a free configuration, where said first friction means are at a distance from said second friction means, and a coupling configuration, where said first friction means and said second friction means cooperate so as to transfer a torque from said shaft to said rotation member.
- said one-way clutch being arranged to transfer a torque from said rotation member to said shaft.

Said clutch device is characterized in that said first friction means are arranged, along a direction generally parallel to said axis of rotation, between said electromagnetic actuator and said second friction means, in that it further comprises stop means configured to hold said second friction means, said stop means being fast with said rotation member, in that said second friction means can move in translation with respect to said stop means, in that said stop means comprise at least one screw having a protruding head and in that said second friction means have a hole for entirely housing said or every head.

Thanks to the present invention, the rotation member is compact, strong and the shaft can transfer a torque to the rotation member.

According to others advantageous but optional features of the present invention, considered on their own or in any technical possible combination:
- said one-way clutch comprises: an internal cylindrical slideway, an external cylindrical slideway, which is concentric with said internal cylindrical slideway, and several cam elements arranged between said internal cylindrical slideway and said external cylindrical slideway, said cam elements being tiltable in one direction, so as to come into clamping engagement with both of said internal and external cylindrical slideways, and being tiltable in an opposite direction, so as to disengage said cam elements from said internal and external cylindrical slideways, each cam element comprising an external sliding surface and an internal sliding surface configured to come into sliding contact or into clamping contact respectively with said internal and external cylindrical slideways;
- said first friction means and said second friction means respectively comprise a first friction plate and a second friction plate, said first friction plate and said second friction plate respectively having an annular form which extends around said axis of rotation and generally perpendicular to said axis of rotation;
- said distance is comprised between 0.5 mm and 5 mm preferably between 1 mm and 3 mm;
- said second friction means comprise a magnetic material and in that said electromagnetic actuator is arranged to move in translation said second friction means;
- the clutch device further comprises resilient means to urge said second fraction means towards said free configuration;
- said resilient means comprise at least one helical spring; and
- said bearing means comprise at least one bearing with rolling elements;
- said first friction means and said second friction means are configured to transfer a second torque greater than 80 N.m, preferably greater than 100 N.m.

Another object of the present invention is to provide an alternator-starter device which efficiently transfers torques in both rotational directions between shaft and pulley. However, the shaft and the pulley always rotate in a same direction.

This object is achieved by an alternator-starter device comprising an alternator-starter shaft, characterized in that it comprises a clutch device as here-above described, said shaft being fast in rotation with said alternator-starter shaft, said rotation member being a pulley configured to be linked by a belt to a crankshaft of an internal combustion engine.

Thanks to the present invention, the clutch device transfers torques in both rotational directions between shaft and pulley, even at low engine rotation speeds.

According to others advantageous but optional features, considered on their own or in any technical possible combination.
- said shaft is arranged, along a direction generally parallel to said axis of rotation, between said stator and said rotation member.

### BRIEF DESCRIPTION OF THE DRAWINGS

The present invention and its advantages will be well understood on the basis of the following description, which is only given as an illustrative example, without restricting the scope of the invention, in relation with the annexed drawings among which:
- Figure 1 is a cross-sectional view of the clutch device according to the invention in a free configuration; and
- Figure 2 is a view analogous to figure 1 of the clutch device of figure in a coupling configuration.

### DETAILED DESCRIPTION OF SOME EMBODIMENTS

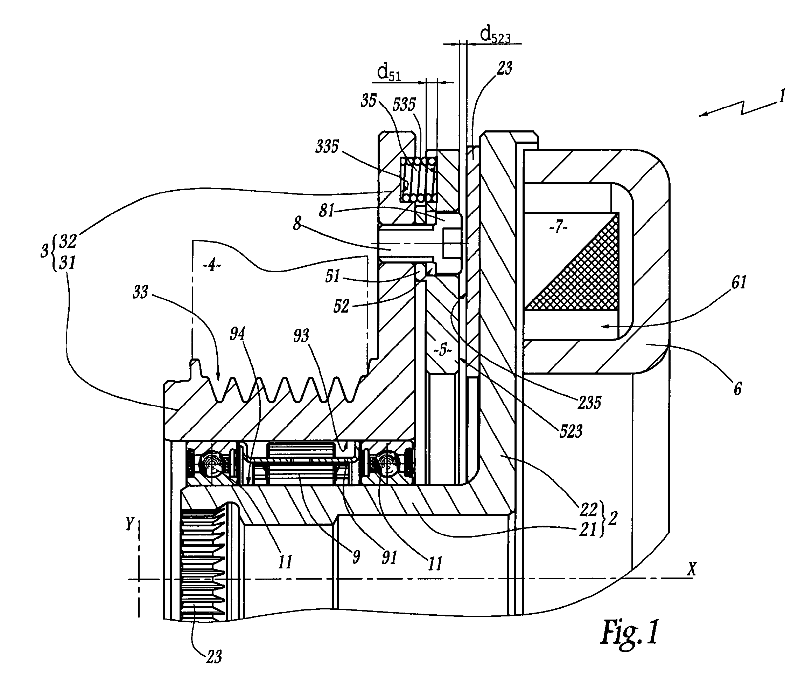

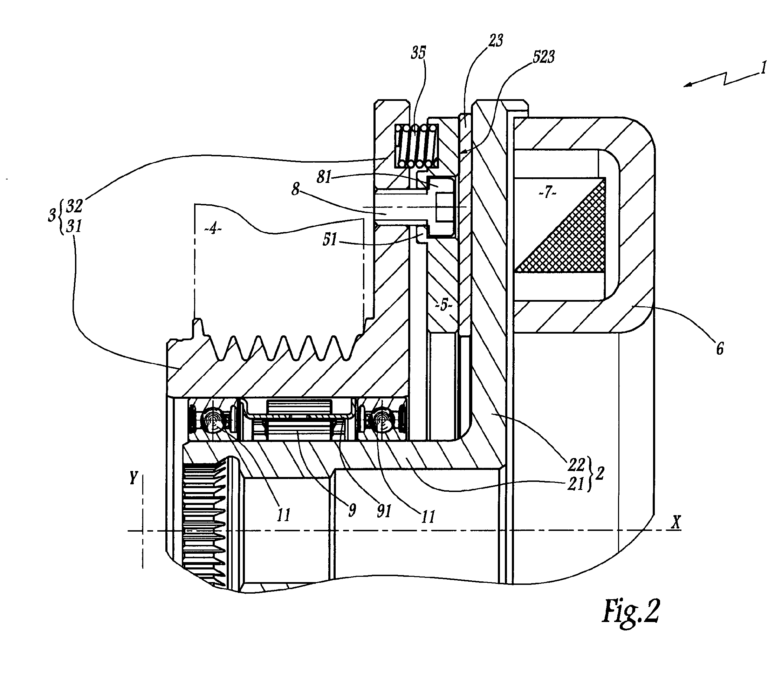

Figure 1 illustrates a clutch device, which comprises a shaft 2 and a pulley 3. Shaft 2 and pulley 3 have a symmetry of revolution around an axis X. Hence, shaft 2 and pulley 3 are concentric with axis X. Two ball bearings 11 are arranged between tube 21 and tubular part 31 along a radial axis Y. In the present application, "axial" refers to axis X and "radial" refers to any axis perpendicular to axis X, for instance axis Y on figures 1 and 2.

Shaft 2 is configured to rotate around axis X. Shaft 2 is hollow and it comprises a tube 21 and a flange 22. Flange 22 has the shape of a ring which extends radially at one end of tube 21. The outer diameter of flange 22 is larger than the outer diameter of tube 21.

Pulley 3 comprises a tubular part 31 and an annular part 32. Annular part 32 extends at one end of tubular part 31. The outer diameter of annular part 32 is larger than the outer diameter of tubular part 31.

Clutch device 1 further comprises a first friction plate 23 and a second friction plate 5. First friction plate 23 and second friction plate 5 respectively form first friction means and second friction means. First friction plate 5 and second friction plate 23 are concentric with axis X. First friction plate 5 and second friction plate 23 respectively have an annular form, with a circular basis having approximately the same inner diameters and the same outer diameters. Second friction plate 5 is arranged between flange 22 and annular part 32, so as to face first friction plate 23.

First friction plate 23 is fastened to the radial end of flange 22 by any known fastening means, e.g. adhesive, welding etc. Thus, first friction plate 23 is fast in rotation with flange 22, hence with shaft 2.

Second friction plate 5 is arranged to move in translation along axis X with respect to pulley 3 and shaft 2. To guide the translation of second friction plate 5, several screws 8, one of which can be seen on figure 1, are fastened into annular part 32, at different angular positions around axis X. For instance, annular part 32 can have four screws 8, each fastened at 90°from the next screw.

Second friction plate 5 has a hole 52 for every screw 8 to pass through. Hole 52 comprises a counterbore machined into the thickness of second friction plate 5 and a cylindrical bore drilled through a shoulder or boss 51 which protrudes from second friction plate 5. The rod of every screw 8 passes through the bore of hole 52, while a protruding head 81 of screw 8 is entirely housed into the counterbore of hole 52.

Screw 8, together with its head 81, acts as a stop means to hold second friction plate 5. Besides, the bore of hole 52 and the rod of screw 8 approximately have the same diameters, so that friction plate 5 is fast in rotation with every screw 8, hence with pulley 3.

Second friction plate 5 can thus move in translation with respect to the rod of every screw 8 and along axis X. Every screw 8 guides second friction plate 5 in translation along axis X. When second friction plate 5 reaches its extreme sliding position, its boss 51 does not butt against the head 81.

Clutch device 1 further comprises a one-way clutch or free-wheel arranged between tube 21 and tubular part 31. This one-way clutch comprises several cam elements 9 distributed around axis X. A cage 91 with a generally cylindrical shape holds and separates cam elements 9.

A one-way clutch provides a freely rotatable condition, when the shaft 2 and the pulley 3 are rotated with respect to each other in a first relative rotational direction, and it provides a clamping effect between the shaft 2 and the pulley 3, when they are rotated with respect to each other in the opposite relative rotational direction. Such a one-way clutch is described in FR-A-2610378. Instead, a clutch device according to the invention may comprise other types of one-way clutch.

The outer radial surface of tube 21 defines an internal cylindrical slideway 94 and the inner radial surface of tubular part 31 defines an external cylindrical slideway 93. Internal 94 and external 93 cylindrical slideways are concentric with axis X. Each cam element 9 comprises an external sliding surface and an internal sliding surface configured to come into sliding contact or into clamping contact, respectively with internal 94 and external 93 cylindrical slide ways.

On the one hand, cam elements 9 are tiltable in one direction so as to come into clamping engagement with both of internal 94 and external 93 cylindrical slideways. When cam elements 9 have come into this clamping engagement, the one-way clutch can transfer a torque from the pulley 3 to the shaft 2.

On the other hand, cam elements 9 are tiltable in an opposite direction, so as to disengage from internal 94 and external 93 cylindrical slideways. When cam elements 9 are disengaged, the one-way clutch achieves a free-wheel function, which allows the shaft 2 to rotate faster than the pulley 3, without transferring any torque.

Clutch device 1 comprises a stator 6 of annular shape concentric with axis X. Clutch device 1 has a "U" cross-section defining the housing 61. An electromagnetic actuator 7 is fixed to stator 6. Electromagnetic actuator 7 can be made of a known coil provided with electrical current to generate a magnetic field.

Second friction plate 5 comprises a magnetic material, e.g. iron, nickel, steel, cobalt, aluminum etc., so as to guide the magnetic field. Thus, electromagnetic actuator 7 can move second friction plate 5 in translation along direction parallel to axis X, along the direction of screw 8.

The electromagnetic actuator 7 is arranged to move second friction plate 5 between a loose or free configuration, illustrated on figure 1, and a coupling configuration, illustrated on figure 2.

In the free configuration, first friction plate 23 is at a distance d₅₂₃ from second friction plate 5. The distance d₅₂₃ is comprised between 0.5 mm and 5 mm, preferably between 1 mm and 3 mm.

In the coupling configuration, first friction plate 23 and second friction plate 5 cooperate so as to transfer a torque between shaft 2 and pulley 3. In the coupling figuration illustrated at figure 2, an axial surface 523 of second friction plate 5 engages a corresponding axial surface 235 of first friction plate 5. In other words, the distance d₅₂₃ becomes null and friction can occur between first friction plate 23 and second friction plate 5. First friction plate 23 and second friction plate 5 are made of materials having a relatively high friction coefficient, like steel, iron or carbon..., at least onto their respective axial surfaces 235 and 523. Furthermore, the surface areas of axial surfaces 235 and 523 are selected to transfer relatively high torques, i.e. greater than 80 N.m and preferably around 100 N.m.

Clutch device 1 also comprises several resilient means distributed around axis X, one of which can be seen on figures 1 and 2 with numeral 35. Resilient means 35 are constituted by helical springs. Instead, a clutch device according to the invention may comprise other types of resilient means. Resilient means 35 are arranged between annular part 32 and second friction plate 5, so as to work in tension. Annular part 32 and second friction 5 have respective recesses 335 and 535 to house each end of the helical springs. When under tension, resilient means 35 urge second friction plate 5 towards its free configuration.

Thus, second friction plate 5 is first moved towards the coupling configuration by the electromagnetic actuator 7. When the activating current is cut off, electromagnetic actuator 7 stops generating a magnetic field, so that second friction plate 5 is moved by resilient means 35 back towards its free configuration.

As can be seen on figure 2, the head 81 of screw 8 is entirely housed into the counterbore of hole 52, so that protruding head 81 does not stick out of the axial surface 523 of second friction plate 5. Consequently, head 81 does not hinder the friction engagement between first friction plate 23 and second friction plate 5. To this end, the distance d₅₂₃ between boss 51 and head 81 must be greater than the distance d₅₂₃ between first 23 and second 5 friction plates in the free configuration.

Tubular part 31 of pulley 3 presents an outer surface 33 equipped with several adjacent V-grooves, which defines several teeth for holding a belt 4. Belt 4 is sketched in chain dotted lines at figures 1 and 2. Belt 4 and clutch device 1 both belong to an alternator-starter device according to the invention. Such an alternator-starter device also comprises a not shown alternator-starter shaft, which is fast in rotation with shaft 2, for instance by way of splines 23.

The rotation member of clutch device 1, i.e. the pulley 3, is configured to be linked by belt 4 to a not shown crankshaft of an internal combustion engine. Along a direction generally parallel to axis X, shaft 2 is arranged between stator 6 and pulley 3, hence first friction plate 23 is arranged between electromagnetic actuator 7 and second friction plate 5. Such an arrangement avoids housing the electromagnetic actuator 7 into the pulley 3. The pulley 3 may therefore have a tubular part 31 of relatively small diameter without any brittle part. Thus, pulley 3 is compact and can transfer high torques.

When the alternator-starter device functions as an alternator, belt 4 is usually driven by the crankshaft with a fluctuating and acyclic rotation speed. Such fluctuations or acyclisms are particularly important with four-cylinders diesel engines, especially at low rotation speeds of the engine and of the pulley. With prior art alternator-starter device, such fluctuations tend to slow down the rotation speed of the alternator shaft and induce high stresses into the belt, hence decrease its service life. With an alternator-starter device according to the invention, such fluctuations or acyclisms of the combustion engine are not transmitted to the alternator-starter.

Thanks to such a one-way clutch, engine can drive the alternator as long as shaft 2 has a rotation speed lower than the rotation speed of pulley 3. Conversely, shaft 2 can transfer a torque to pulley 3 and belt 4. On the other hand, when shaft 2, hence alternator shaft, turns faster than pulley 3, the one-way clutch acts as a free-wheel, so that the alternator can turn without being slowed down by belt 4, until the rotation speed of the pulley 3 reaches the rotation speed of shaft 2.

A first method for starting the engine comprises the steps of first operating the clutch device 1, by engaging first friction plate 23 and second friction plate 5, then rotating the alternator shaft and shaft 2, the latter driving pulley 3 and belt 4. Another method for starting the engine comprises the steps of first rotating the alternator shaft and shaft 2, then operating the clutch device 1.

An alternator-starter device according to the invention permits to start an internal combustion engine from the alternator very quickly, say in a few milliseconds. Then, the activating current can be cut-off and the second friction plate 5 released in its free configuration. Furthermore, it permits to transfer relative high torques up to 100 N.m. The specific arrangement of the clutch device according to the invention only requires to move second friction plate 5, which is annular and quite light, instead of moving the whole shaft or the whole pulley. Hence, the electromagnetic actuator 7 has limited overall dimensions. The fixation of the electromagnetic actuator 7 into a stator 6 facilitates the electrical current supply.

According to a non-shown embodiment, the clutch device can comprise only one rolling bearing with rolling elements, such as balls, rollers, needles etc., instead of the two ball bearings 11 like the embodiments of figures 1 and 2. Furthermore, the clutch device can comprise more than two rolling bearing with rolling elements.

Moreover, the electromagnetic actuator 7 can be fixed onto the case of the alternator-starter device. More accurately, conventional alternator-starter devices have an axial space between the pulley and the case of the alternator-starter device, which can advantageously receive the electromagnetic actuator 7. Alternatively, the electromagnetic actuator 7 can be integrated inside the alternator-starter device itself. Such a location of the electromagnetic actuator provides the clutch device with a relatively high axial compactness, without any axially protruding part for housing the electromagnetic actuator.

## Claims

1. Clutch device (1) comprising:
- a shaft (2) configured to rotate around an axis of rotation (X),
- a rotation member (3) which is concentric with said shaft (2),
- bearing means (11) arranged between said rotation member (3) and said shaft (2),
- first friction means (23) fast in rotation with said shaft (2),
- second friction means (5) fast in rotation with said rotation member (3), said second friction means (5) being arranged so as to face said first friction means (23), at least one of said first friction means (23) and said second friction means (5) being configured to move in translation,
- a one-way clutch (9, 91-94) arranged between said shaft (2) and said rotation member (3),
- a stator (6) having an electromagnetic actuator (7) arranged to move at least one of said first friction means (23) and said second friction means (5), in translation between a free configuration, where said first friction means (23) are at a distance (d₅₂₃) from said second friction means (5), and a coupling configuration, where said first friction means (23) and said second friction means (5) cooperate so as to transfer a torque from said shaft (2) to said rotation member (3), said one-way clutch (9, 91-94) being arranged to transfer a torque from said rotation member (3) to said shaft (2),
said clutch device (1) being **characterized in that**
- said first friction means (23) are arranged, along a direction generally parallel to said axis of rotation (X), between said electromagnetic actuator (7) and said second friction means (5),
- said clutch device (1) further comprises stop means (8) configured to hold said second friction means (5), said stop means (8) being fast with said rotation member (3) and said second friction means (5) being adapted to move in translation with respect to said stop means (8),
- said stop means (8) comprise at least one screw fastened into an annular part (32) of the rotation member (3), the annular part (32) having a larger diameter than the diameter of a tubular part (31) of the rotation member (3), said stop means (8) having a protruding head (81) and **in that** said second friction means (5) have a hole (52) for entirely housing said or every head (81).

2. Clutch device (1) according to claim 1, **characterized in that** said one-way clutch (9, 91-94) comprises:
- an nternal cylindrical slideway (94), an external cylindrical slideway (93), which is concentric with said internal cylindrical slideway (94), and
- several cam elements (9) arranged between said internal cylindrical slideway (94) and said external cylindrical slideway (93), said cam elements (9) being tiltable in one direction, so as to come into clamping engagement with both of said internal (94) and external (93) cylindrical slideways, and being tiltable in an opposite direction, so as to disengage said cam elements (9) from said internal (94) and external (93) cylindrical slideways, each cam element (9) comprising an external sliding surface and an internal sliding surface configured to come into sliding contact or into clamping contact respectively with said internal (94) and external (93) cylindrical slideways.

3. Clutch device (1) according to any preceding claim, **characterized in that** said first friction means (23) and said second friction means (5) respectively comprise a first friction plate (23) and a second friction plate (5), said first friction plate (23) and said second friction plate (5) respectively having an annular form which extends around said axis of rotation (X) and generally perpendicular to said axis of rotation (X).

4. Clutch device (1) according to any preceding claim, **characterized in that** said distance (d₅₂₃) is comprised between 0,5 mm and 5 mm, preferably between 1 mm and 3 mm.

5. Clutch device (1) according to any preceding claim, **characterized in that** said second friction means (5) comprise a magnetic material and **in that** said electromagnetic actuator (7) is arranged to move in translation said second friction means (5).

6. Clutch device (1) according to any preceding claim, **characterized in that** it further comprises resilient means (35) to urge said second friction means (5) towards said free configuration (fig.1).

7. Clutch device (1) according to claim 6, **characterized in that** said resilient means (35) comprise at least one helical spring.

8. Clutch device (1) according to any preceding claim, **characterized in that** said bearing means (11) comprise at least one bearing with rolling elements.

9. Clutch device (1) according to any preceding claim, **characterized in that** said first friction means (23) and said second friction means (5) are configured to transfer a second torque greater than 80 N.m, preferably greater than 100 N.m.

10. Alternator-starter device comprising an alternator-starter shaft, **characterized in that** it comprises a clutch device (1) according to any preceding claim, said shaft (2) being fast in rotation with said alternator-starter shaft, said rotation member (3) being a pulley configured to be linked by a belt (4) to a crankshaft of an internal combustion engine.

11. Alternator-starter device according to claim 10, **characterized in that** said shaft (2) is arranged, along a direction generally parallel to said axis of rotation (X), between said stator (6) and said rotation member (3).

## Patentansprüche

1. Kupplungsvorrichtung (1), welche aufweist:
- eine Welle (2), die ausgebildet ist, sich um eine Drehachse (X) zu drehen,
- ein Drehteil (3), das konzentrisch mit der Welle (2) ist,
- Lagermittel (11), die zwischen dem Drehteil (3) und der Welle (2) angeordnet sind,
- erste Reibmittel (23), die drehfest mit der Welle (2) sind,
- zweite Reibmittel (5), die drehfest mit dem Drehteil (3) sind, welche zweiten Reibmittel (5) so angeordnet sind, dass sie den ersten Reibmitteln (23) zugewandt sind, wobei zumindest die einen von den ersten Reibmitteln (23) und den zweiten Reibmitteln (5) so ausgebildet sind, dass sie verschiebbar sind,
- eine Einwegkupplung (9,91 - 94), die zwischen der Welle (2) und dem Drehteil (3) angeordnet ist,
- einen Stator (6) mit einem elektromagnetischen Betätigungsglied (7), das angeordnet ist, um zumindest die einen von den ersten Reibmitteln (23) und den zweiten Reibmitteln (5) zu verschieben zwischen einer freien Konfiguration, in der die ersten Reibmittel (23) einen Abstand (d₅₂₃) von den zweiten Reibmitteln (5) aufweisen, und einer Kopplungskonfiguration, in der die ersten Reibmittel (23) und die zweiten Reibmittel (5) zusammenwirken, um ein Drehmoment von der Welle (2) auf das Drehteil (3) zu übertragen, wobei die Einwegkupplung (9, 91 - 94) so ausgebildet ist, dass sie ein Drehmoment von dem Drehteil (3) auf die Welle (2) überträgt, welche Kupplungsvorrichtung (1) **dadurch gekennzeichnet ist, dass**
- die ersten Reibmittel (23) entlang einer im Allgemeinen zu der Drehachse (X) parallelen Richtung zwischen dem elektromagnetischen Betätigungsglied (7) und den zweiten Reibmitteln (5) angeordnet sind,
- die Kupplungsvorrichtung (1) weiterhin Anschlagmittel (8) aufweist, die zum Halten der zweiten Reibmittel (5) ausgebildet sind, welche Anschlagmittel (8) an dem Drehteil (3) befestigt sind und die zweiten Reibmittel (5) ausgebildet sind, gegenüber den Anschlagmitteln (8) verschoben zu werden,
- die Anschlagmittel (8) zumindest eine Schraube aufweisen, die in einem ringförmigen Teil (32) des Drehteils (3) befestigt ist, welcher ringförmige Teil (32) einen größeren Durchmesser als den Durchmesser eines rohrförmigen Teils (31) des Drehteils (3) hat, wobei die Anschlagmittel einen vorstehenden Kopf (81) und die zweiten Reibmittel (5) ein Loch (52) zur vollständigen Aufnahme des oder jedes Kopfes (81) haben.

2. Kupplungsvorrichtung (1) nach Anspruch 1, **dadurch gekennzeichnet, dass** die Einwegkupplung (9, 91 - 94) aufweist:
- eine innere zylindrische Gleitbahn (94), eine äußere zylindrische Gleitbahn (93), die konzentrisch mit der inneren zylindrischen Gleitbahn (94) ist, und
- mehrere Nockenelemente (9), die zwischen der inneren zylindrischen Gleitbahn (94) und der äußeren zylindrischen Gleitbahn (93) angeordnet sind, welche Nockenelemente (9) in einer Richtung neigbar sind, um in einen Klemmeingriff sowohl mit der inneren (94) als auch der äußeren (93) zylindrischen Gleitbahn zu treten, und in einer entgegengesetzten Richtung neigbar sind, um die Nockenelemente (9) außer Eingriff mit der inneren (94) und der äußeren (93) zylindrischen Gleitbahn zu bringen, und jedes Nockenelement (9) eine äußere Gleitfläche und eine innere Gleitfläche aufweist, die ausgebildet sind, in Gleitkontakt oder in Klemmkontakt jeweils mit der inneren (94) und der äußeren (93) zylindrischen Gleitbahn zu gelangen.

3. Kupplungsvorrichtung (1) nach einem der vorhergehenden Ansprüche, **dadurch gekennzeichnet, dass** die ersten Reibmittel (23) bzw. die zweiten Reibmittel (5) eine erste Reibplatte (23) und eine zweite Reibplatte (5) aufweisen, wobei die erste Reibplatte (23) und die zweite Reibplatte (5) jeweils eine ringförmige Form haben, die sich um die Drehachse (X) herum erstreckt und im Allgemeinen senkrecht zu der Drehachse (X) ist.

4. Kupplungsvorrichtung (1) nach einem der vorhergehenden Ansprüche, **dadurch gekennzeichnet, dass** der Abstand (d₅₂₃) zwischen 0,5 mm und 5 mm, vorzugsweise zwischen 1 mm und 3 mm beträgt.

5. Kupplungsvorrichtung (1) nach einem der vorhergehenden Ansprüche, **dadurch gekennzeichnet, dass** die zweiten Reibmittel (5) ein magnetisches Material aufweist und dass das elektromagnetische Betätigungsglied (7) ausgebildet ist, die zweiten Reibmittel (5) zu verschieben.

6. Kupplungsvorrichtung (1) nach einem der vorhergehenden Ansprüche, **dadurch gekennzeichnet, dass** sie weiterhin elastische Mittel (35) aufweist, um die zweiten Reibmittel (5) zu der freien Konfiguration hin zu drücken (Fig. 1).

7. Kupplungsvorrichtung (1) nach Anspruch 6, **dadurch gekennzeichnet, dass** die elastischen Mittel (35) zumindest eine wendelförmige Feder aufweisen.

8. Kupplungsvorrichtung (1) nach einem der vorhergehenden Ansprüche, **dadurch gekennzeichnet, dass** die Lagermittel (11) zumindest ein Lager mit Rollelementen aufweisen.

9. Kupplungsvorrichtung (1) nach einem der vorhergehenden Ansprüche, **dadurch gekennzeichnet, dass** die ersten Reibmittel (23) und die zweiten Reibmittel (5) ausgebildet sind zum Übertragen eines zweiten Drehmoments, das größer als 80 N·m, vorzugsweise größer als 100 N·m ist.

10. Starter-Generatorvorrichtung, aufweisend eine Starter-Generatorwelle, **dadurch gekennzeichnet, dass** sie eine Kupplungsvorrichtung (1) nach einem der vorhergehenden Ansprüche aufweist, wobei die Welle (2) drehfest mit der Starter-Generatorwelle ist und das Drehteil (3) eine Riemenscheibe ist, die ausgebildet ist, durch einen Riemen (4) mit einer Kurbelwelle einer Verbrennungsmaschine verbunden zu sein.

11. Starter-Generatorvorrichtung nach Anspruch 10, **dadurch gekennzeichnet, dass** die Welle (2) entlang einer im Allgemeinen zu der Drehachse (X) parallelen Richtung zwischen dem Stator (6) und dem Drehteil (3) angeordnet ist.

## Revendications

1. Dispositif d'embrayage (1) comprenant :
un arbre (2) configuré pour tourner autour d'un axe de rotation (X),
un élément de rotation (3) qui est concentrique audit arbre (2),
des moyens de palier (11) agencés entre ledit élément de rotation (3) et ledit arbre (2),
des premiers moyens de friction (23) solidaires en rotation dudit arbre (2),
des seconds moyens de friction (5) solidaires en rotation dudit élément de rotation (3), lesdits seconds moyens de friction (5) étant agencés afin de faire face auxdits premiers moyens de friction (23), au moins l'un parmi lesdits premiers moyens de friction (23) et lesdits seconds moyens de friction (5) étant configuré pour se déplacer en translation,
un embrayage unidirectionnel (9, 91-94) agencé entre ledit arbre (2) et ledit élément de rotation (3),
un stator (6) ayant un actionneur électromagnétique (7) agencé pour déplacer au moins l'un parmi lesdits premiers moyens de friction (23) et lesdits seconds moyens de friction (5), en translation entre une configuration libre dans laquelle lesdits premiers moyens de friction (23) sont à une distance (d₅₂₃) desdits seconds moyens de friction (5), et une configuration de couplage dans laquelle lesdits premiers moyens de friction (23) et lesdits seconds moyens de friction (5) coopèrent afin de transférer un couple dudit arbre (2) audit élément de rotation (3), ledit embrayage unidirectionnel (9, 91-94) étant agencé pour transférer un couple dudit élément de rotation (3) audit arbre (2),
ledit dispositif d'embrayage (1) étant **caractérisé en ce que** :
lesdits premiers moyens de friction (23) sont agencés, le long d'une direction généralement parallèle audit axe de rotation (X), entre ledit actionneur électromagnétique (7) et lesdits seconds moyens de friction (5),
ledit dispositif d'embrayage (1) comprend en outre des moyens de butée (8) configurés pour maintenir lesdits seconds moyens de friction (5), lesdits moyens de butée (8) étant solidaires en rotation dudit élément de rotation (3) et lesdits seconds moyens de friction (5) étant adaptés pour se déplacer en translation par rapport auxdits moyens de butée (8),
lesdits moyens de butée (8) comprennent au moins une vis fixée dans une partie annulaire (32) de l'élément de rotation (3), la partie annulaire (32) ayant un plus grand diamètre que le diamètre d'une partie tubulaire (31) de l'élément de rotation (3), lesdits moyens de butée (8) ayant une tête en saillie (81), lesdits seconds moyens de friction (5) ayant un trou (52) pour loger entièrement ladite ou chaque tête (81).

2. Dispositif d'embrayage (1) selon la revendication 1, **caractérisé en ce que** ledit embrayage unidirectionnel (9 ; 91-94) comprend :
une glissière cylindrique interne (94), une glissière cylindrique externe (93) qui est concentrique à ladite glissière cylindrique interne (94), et
plusieurs éléments de came (9) agencés entre ladite glissière cylindrique interne (94) et ladite glissière cylindrique externe (93), lesdits éléments de came (9) pouvant s'incliner dans une direction, afin de venir en mise en prise de serrage à la fois avec lesdites glissières cylindriques interne (94) et externe (93), et pouvant s'incliner dans une direction opposée, afin de dégager lesdits éléments de came (9) desdites glissières cylindriques interne (94) et externe (93), chaque élément de came (9) comprenant une surface de glissement externe et une surface de glissement interne configurées pour venir en contact glissant ou en contact de serrage respectivement avec lesdites glissières cylindriques interne (94) et externe (93).

3. Dispositif d'embrayage (1) selon l'une quelconque des revendications précédentes, **caractérisé en ce que** lesdits premiers moyens de friction (23) et lesdits seconds moyens de friction (5) respectivement comprennent une première plaque de friction (23) et une seconde plaque de friction (5), ladite première plaque de friction (23) et ladite seconde plaque de friction (5) respectivement ayant une forme annulaire qui s'étend autour dudit axe de rotation (X) et généralement perpendiculairement audit axe de rotation (X).

4. Dispositif d'embrayage (1) selon l'une quelconque des revendications précédentes, **caractérisé en ce que** ladite distance (d₅₂₃) est comprise entre 0,5 mm et 5 mm, de préférence entre 1 mm et 3 mm.

5. Dispositif d'embrayage (1) selon l'une quelconque des revendications précédentes, **caractérisé en ce que** lesdits seconds moyens de friction (5) comprennent un matériau magnétique et **en ce que** ledit actionneur électromagnétique (7) est agencé pour déplacer en translation lesdits seconds moyens de friction (5).

6. Dispositif d'embrayage (1) selon l'une quelconque des revendications précédentes, **caractérisé en ce qu'**il comprend en outre des moyens élastiques (35) pour pousser lesdits seconds moyens de friction (5) vers ladite configuration libre (figure 1) .

7. Dispositif d'embrayage (1) selon la revendication 6, **caractérisé en ce que** lesdits moyens élastiques (35) comprennent au moins un ressort hélicoïdal.

8. Dispositif d'embrayage (1) selon l'une quelconque des revendications précédentes, **caractérisé en ce que** lesdits moyens de palier (11) comprennent au moins un palier avec des éléments roulants.

9. Dispositif d'embrayage (1) selon l'une quelconque des revendications précédentes, **caractérisé en ce que** lesdits premiers moyens de friction (23) et lesdits seconds moyens de friction (5) sont configurés pour transférer un second couple supérieur à 80 N.m, de préférence supérieur à 100 N.m.

10. Dispositif d'alternateur-démarreur comprenant un arbre d'alternateur-démarreur, **caractérisé en ce qu'**il comprend un dispositif d'embrayage (1) selon l'une quelconque des revendications précédentes, ledit arbre (2) étant solidaire en rotation dudit arbre d'alternateur-démarreur, ledit élément de rotation (3) étant une poulie configurée pour être reliée par une courroie (4) à un vilebrequin d' un moteur à combustion interne.

11. Dispositif d'alternateur-démarreur selon la revendication 10, **caractérisé en ce que** ledit arbre (2) est agencé, le long d'une direction généralement parallèle audit axe de rotation (X), entre ledit stator (6) et ledit élément de rotation (3).
